# EUROPEAN PATENT SPECIFICATION

(11) **EP 4 287 372 B1**
(45) Date of publication and mention of the grant of the patent: **11.03.2026**
(21) Application number: 22746075.5
(22) Date of filing: 31.01.2022
(51) Int. Cl.: H01M 50/204, H01M 10/613, H01M 10/653, H01M 10/6554, H01M 10/6555, H01M 50/213, H01M 50/293

(54) **ASSEMBLED BATTERY AND BATTERY PACK**
ZUSAMMENGESETZTE BATTERIE UND BATTERIEPACK
BATTERIE ASSEMBLÉE ET BATTERIE

(30) Priority: 01.02.2021 JP 2021014632
(43) Date of publication of application: 06.12.2023
(73) Proprietor: IBIDEN Co., Ltd., Gifu 503-8604 (JP)
(72) Inventor: TANGE, Keisuke, Ibi-gun, Gifu 501-0695 (JP)
(74) Representative: Hoffmann Eitle
(86) International application number: PCT/JP2022/003686
(87) International publication number: WO 2022/163856

(56) References cited:
- WO-A1-2019/187313
- CN-U- 210 467 919
- JP-A- 2009 176 464
- JP-A- 2018 206 605
- JP-A- 2019 053 816
- JP-A- 2019 083 150
- JP-A- 2020 072 005
- KR-A- 20200 128 411
- US-A1- 2020 335 737

## Description

### TECHNICAL FIELD

The present invention relates to an assembled battery and a battery pack which are to be mounted, for example, in power tools, etc. and used as power sources for electric motors, etc.

### BACKGROUND ART

Power tools generally include ones which are used in the state of being connected to the so-called commercial power source and ones which have an assembled battery mounted therein that serves as a power source for an electric motor for driving. The power tools having an assembled battery mounted therein are frequently used from the point of view of the excellent handleability, etc.

An assembled battery is a battery in which a plurality of battery cells is connected serially or in parallel. For example, battery cells are enclosed in a battery case made of, for example, a polycarbonate and united therewith, and the assembled battery is housed inside a power tool.

Mainly used as such battery cells to be mounted in power tools are lithium-ion secondary batteries, which can have higher capacities and higher outputs than lead acid batteries and nickel-hydrogen batteries. However, in case where thermal runaway has occurred in one battery cell because of internal short-circuiting, overcharge, or the like of the battery (that is, in case of "abnormality"), it is possible that heat transfer to adjoining another battery cells might occur to cause thermal runaway to the adjoining another battery cells.

As a measure against the occurrence of thermal runaway described above, JP 2014-96271 A, for example, proposes an assembled battery in which in case where abnormal heat generation has occurred, for example, because an overcurrent has flowed into a battery cell, the burning can be prevented or inhibited from spreading to adjoining battery cells. The assembled battery described in JP 2014-96271 A is configured of a plurality of battery cells and a block for holding the battery cells, the block being made of a metallic material and composed of a plurality of small blocks. The dimensions of the gap between the block and each battery cell are regulated.

JP 2014-96271 A states that in the assembled battery described therein, which has such configuration, heat can be rapidly diffused because the block holding the battery cells is made of a metallic material.

JP 2013-187089 A discloses an anti-firing material capable of reducing the risk of firing in electricity storage devices. The above anti-firing material is, for example, a porous carbonaceous material having a noncombustible gas, aqueous solvent, or noncombustible solvent adsorbed into the pores and onto the surface thereof.

JP 2013-187089 A as stated above describes that in case of abnormality, when the secondary battery has released the electrolytic solution or a gaseous component, e.g., an electrolytic-solution decomposition gas, an effect can be obtained in which the gaseous component passes through the above anti-firing material and is thereby reduced in temperature.

US 2020/335737 A1 refers to a cell assembly group, comprising a plurality of cell assemblies, each cell assembly including an electrochemical cell and an outer wrap surrounding the cell, a foam sheet positioned adjacent one side of one cell assembly, a plurality of heat plates, each heat plate being positioned between two cell assemblies, and at least one spacer positioned between one heat plate and one cell assembly. Each outer wrap of each cell assembly of the plurality of cell assemblies includes a body having an inner surface that engages a rearward wall of the electrochemical cell of the cell assembly, a first portion having a flame barrier that engages a forward wall of the electrochemical cell of the cell assembly, and a second portion that engages an outer surface of the first portion.

CN 210 467 919 U describes a battery core module, comprising a plurality of battery packs having a plurality of battery cores, and a flame retardant component covering the outer surface of the battery core.

KR 2020 0128411 A relates to a safety protection and control method and device for a battery energy storage module, the device comprising a flame-retardant insulating element.

### SUMMARY OF INVENTION

### TECHNICAL PROBLEMS

However, in the assembled battery described in JP 2014-96271 A, since the block made of a metallic material is composed of two, vertically separated parts and has a heat insulator disposed between the two parts, it is difficult to efficiently dissipate heat generated from one battery.

Furthermore, the assembled battery described in JP 2014-96271 A necessitates a plurality of blocks and the blocks need to be designed in accordance with the electronic appliance, power tool, or the like in which the assembled battery is to be mounted, since the gaps between the blocks and the battery cells are varied. There is hence a problem in that the design of the blocks and fabrication of the assembled battery are complicated.

With respect to JP 2013-187089 A, the anti-firing material, although effective against the evolution of a gaseous component from a secondary battery in case of abnormality, is unable to lower the temperature of the batteries themselves in cases when the battery cells which have been fabricated into an assembled battery are subjected to charge/discharge cycling (i.e., "during ordinary use") and in case of abnormality.

The present invention is made in view of the aforementioned problems, and an object of the invention is to provide an assembled battery and a battery pack which are easy to design and fabricate and in which during ordinary use and in case of abnormality, heat transfer between battery cells can be inhibited and the battery cells can be efficiently cooled to inhibit the occurrence of thermal runaway.

### SOLUTION TO THE PROBLEMS

The object of the present invention is accomplished with an assembled battery as defined in independent claim 1.

Preferred embodiments of the present invention regarding the assembled battery are recited in the dependent claims.

The object of the present invention is accomplished with a battery pack as defined in claim 10.

### ADVANTAGEOUS EFFECTS OF INVENTION

Since the assembled battery of the present invention includes a flameproof material covering the peripheral surface of each battery cell, the transfer of heat between the battery cells can be inhibited during ordinary use and in case of abnormality. Since the assembled battery of the present invention includes a heat dissipation member covering the peripheral surface of the flameproof material, heat generated from each battery cell can be efficiently radiated to the outside. Furthermore, since the assembled battery of the present invention can be fabricated by merely attaching the flameproof material and the heat dissipation member to the peripheral surface of each battery cell, there is no need of changing the design of the battery case in accordance with the kind of the battery cells and fabrication of the assembled battery requires no complicated operation.

Since the battery pack of the present invention includes the assembled battery encased, not only the transfer of heat between the battery cells can be inhibited and the propagation of thermal runaway can be prevented, but also this battery pack can be easily fabricated.

### BRIEF DESCRIPTION OF DRAWINGS

FIG. 1 is a cross-sectional view schematically illustrating a battery pack containing an assembled battery according to a first embodiment useful for understanding the invention.
FIG. 2 is a cross-sectional view schematically illustrating a battery pack containing an assembled battery according to a second embodiment representing the present invention.
FIG. 3 is a cross-sectional view schematically illustrating a battery pack containing an assembled battery according to a third embodiment of the present invention.
FIG. 4 is a perspective view showing a shape example of elastic members applicable to an assembled battery according to an embodiment of the present invention.
FIG. 5 is a perspective view showing another shape example of elastic members applicable to the assembled battery according to an embodiment of the present invention.
FIG. 6 is a perspective view showing still another shape example of elastic members applicable to the assembled battery according to an embodiment of the present invention.

### DESCRIPTION OF EMBODIMENTS

The present inventor diligently made investigations in order to provide an assembled battery in which during ordinary use and in case of abnormality, heat transfer between the battery cells can be inhibited and the battery cells can be efficiently cooled to inhibit the occurrence of thermal runaway.

As a result, the inventor has discovered that the problems described above can be eliminated by covering the peripheral surface of each battery cell with a flameproof material and covering the peripheral surface thereof with a heat dissipation member.

Embodiments of the present invention are described in detail below while referring to the drawings. The present invention is not limited to the following embodiments.

### [Battery Pack]

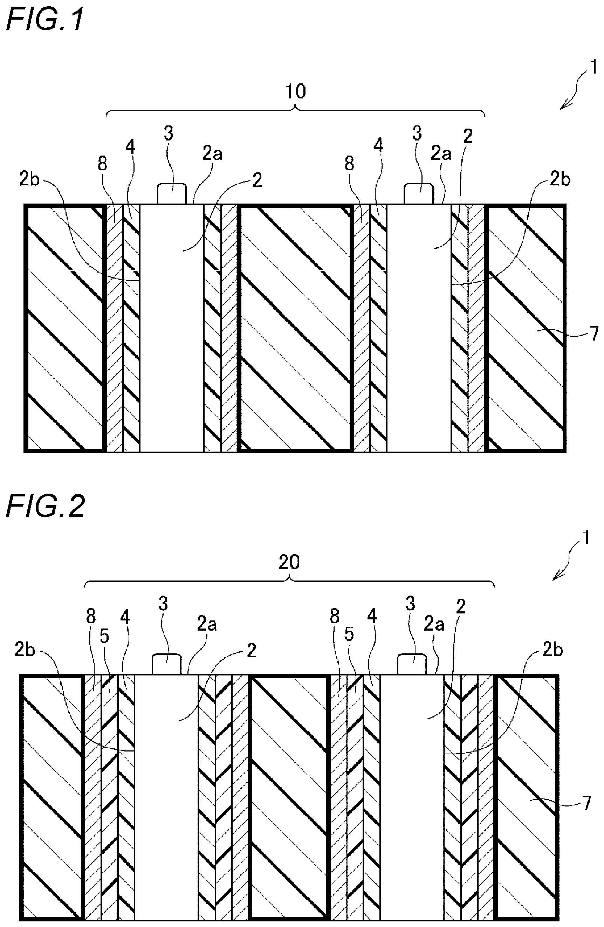

FIG. 1 is a cross-sectional view schematically illustrating a battery pack containing an assembled battery according to a first embodiment useful for understanding the invention. The battery pack 1 is one obtained by encasing an assembled battery 10 according to a first embodiment, which is described in detail below, in a battery case 7 made of, for example, a resin.

### <Assembled Battery>

### [First Embodiment]

The assembled battery according to a first embodiment useful for understanding the invention is described in detail below.

Each battery cell 2 has an electrode surface 2a having an electrode 3 and a peripheral surface 2b that is a surface orthogonal to the electrode surface 2a. The battery cells 2 have been disposed such that the peripheral surfaces 2b thereof face each other, and are connected serially or in parallel, with the electrodes 3 and a connector (not shown), etc. interposed therebetween.

The peripheral surface 2b of each battery cell 2 is covered with a flameproof material 4 and the peripheral surface of the flameproof material 4 is covered with a heat dissipation member 8, thereby configuring the assembled battery 10. The heat dissipation member 8 is, for example, a tubular body which is open at both ends, and covers the peripheral surface of the battery cell 2 and flameproof material 4. In this embodiment, the expression "both ends of the heat dissipation member 8 (tubular body)" means one longitudinal-direction (top-bottom direction in FIG. 1) end of the heat dissipation member 8 and the other end thereof, namely, the open ends of the tubular body.

In the assembled battery 10 having such configuration, since the peripheral surface 2b of each battery cell 2 is covered with the flameproof material 4, heat generated from the battery cell 2 during ordinary use can be inhibited from being transferred to the periphery. Meanwhile, even in a case where thermal runaway has occurred in one of the battery cells in case of abnormality, heat transfer to the periphery is inhibited and the other battery cell, which adjoins said one battery cell, can be inhibited from receiving the heat, making it possible to prevent the thermal runaway from propagating.

The heat dissipation member 8 further covering the peripheral surface of the battery cell 2 and flameproof material 4 is made of a material having excellent thermal conductivity, as will be described later. Because of this, in cases when some of the heat was unable to be inhibited by the flameproof material 4 from being transferred and has reached the heat dissipation member 8, then the heat spreads in plane directions of the dissipation member 8 and is radiated to both end sides of the heat dissipation member 8. The battery cell 2 can hence be efficiently cooled.

Incidentally, when thermal runaway occurs in a battery cell in case of abnormality, a gas is evolved within this battery to elevate the internal pressure and thus cause a deformation of the battery cell. This deformation, when large, may cause breakage of the case.

In the assembled battery 10 according to the first embodiment, the heat dissipation member 8 is a tubular body as stated above, and is made of a material such as, for example, a metal or carbon, and has substantially no stretchability. Because of this, in cases when the gap between the heat dissipation member 8 and the battery cell 2 and flameproof material 4 is small, an effect can be obtained in which if the battery cell 2 deforms in case of abnormality, the heat dissipation member 8 inhibits the battery cell 2 from deforming. The battery case 7 can hence be inhibited from breaking.

If the battery cell 2 has heated up to an even higher temperature and exploded due to an increase in internal pressure, the covering of the battery cell 2 with the heat dissipation member 8 makes it possible to avoid a trouble, for example, that fragments of the battery cell 2, an organic electrolytic liquid present in the battery cell 2, etc. reach other battery cells 2 to exert an adverse influence.

In this embodiment, the battery cells 2 may be prismatic or round.

Each flameproof material 4 preferably covers all of the peripheral surface of the battery cell 2. However, a part of the peripheral surface may be uncovered according to need, so long as the flameproof material 4 can inhibit the propagation of thermal runaway described above.

Each heat dissipation member 8 also preferably covers all of the peripheral surface of the battery cell 2 covered with the flameproof material 4. However, a part of the peripheral surface may be uncovered according to need, so long as the heat dissipation member 8 can have the heat dissipation effect described above.

In the assembled battery 10 according to the first embodiment described above, the heat dissipation members 8 were each a tubular body open at both ends. However, the heat dissipation members 8 are not limited to tubular bodies. For example, a sheet-shaped heat dissipation material may be used and wrapped around the outer surface of a battery cell 2 covered with a flameproof material 4 to form a heat dissipation member 8.

In the case of using a heat dissipation member thus formed, the effect of inhibiting the battery cell 2 from deforming is lower than in the case of using the tubular heat dissipation member 8. However, since battery cells slightly deform during ordinary use, the heat dissipation member formed by wrapping a sheet-shaped heat dissipation material around the peripheral surface of the flameproof material 4 can flexibly cope with the deformations during ordinary use.

Even with a sheet-shaped heat dissipation material, a tubular heat dissipation member 8 can be easily produced by wrapping the sheet around the outer surface of the flameproof material 4 and then fixing the free end of the wrapped sheet to a part of the wrapped sheet.

### [Second Embodiment]

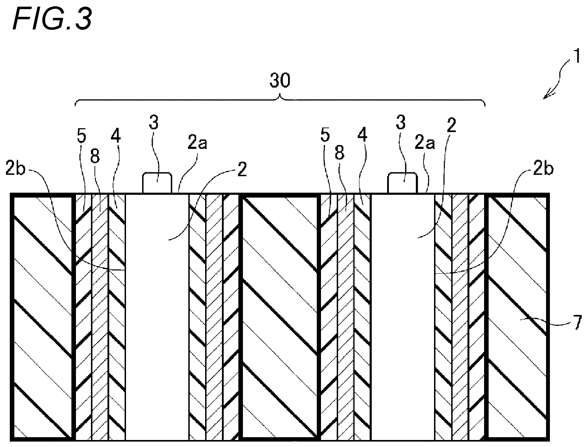

FIG. 2 is a cross-sectional view schematically illustrating a battery pack containing an assembled battery according to a second embodiment representing the present invention. In FIGs. 2 and 3, which show the second and third embodiments described below, parts or portions that are identical with or equal to those in the first embodiment are designated by like numerals, and explanations thereon are omitted or simplified.

In the second embodiment, the assembled battery 20 includes elastic members 5 each disposed between a flameproof material 4 and a heat dissipation member 8 over the peripheral surface 2b of a battery cell 2. Like the heat dissipation member 8, the elastic member 5 is, for example, a tubular body which is open at both ends. The elastic member 5 covers the peripheral surface of the battery cell 2 and flameproof material 4 along the peripheral direction and presses the battery cell.

In the second embodiment, which has such configuration, the elastic members 5, which press the battery cells 2, have both the effect of inhibiting the battery cells 2 from deforming and the effect of absorbing deformations of the battery cells 2. That is, when a battery cell 2 deforms in case of abnormality, the heat dissipation member 8 flexibly deforms in accordance with the deformation of the battery cell 2 while inhibiting the deformation of the battery cell 2. Because of this, even when the heat dissipation member is one formed from a sheet-shaped heat dissipation material, the elastic member 5 can absorb the deformations of the battery cell 2 to inhibit the battery case 7 from breaking.

Furthermore, during ordinary use, the elastic member 5 disposed between the flameproof material 4 and the heat dissipation member 8 can absorb slight deformations of the battery cell 2 to prevent a pressure from being unnecessarily applied to adjoining battery cells 2.

### [Third Embodiment]

FIG. 3 is a cross-sectional view schematically illustrating a battery pack containing an assembled battery according to a third embodiment of the present invention.

In the third embodiment, the assembled battery 30 includes elastic members 5 each disposed on the outer side of a flameproof material 4 and a heat dissipation member 8 over the peripheral surface 2b of a battery cell 2. The elastic member 5 is, for example, a tubular body which is open at both ends, as in the second embodiment. The elastic member 5 covers, along the peripheral direction, the peripheral surface of the battery cell 2 covered with both the flameproof material 4 and the heat dissipation member 8 and presses the battery cell.

The third embodiment, which has such configuration, is especially effective, for example, when heat dissipation members formed from sheet-shaped heat dissipation materials are used. As stated above, in cases when a heat dissipation member formed from a sheet-shaped heat dissipation material is used on the peripheral surface of a battery cell 2 covered with a flameproof material 4, then the effect of inhibiting the battery cell 2 from deforming is lessened. In this embodiment, however, since an elastic member 5 has been further disposed on the peripheral surface of the heat dissipation member. it is possible, during ordinary use and in case of abnormality, to absorb deformations of the battery cell 2 while inhibiting the battery cell 2 from deforming, thereby inhibiting the battery case 7 from breaking.

Materials for forming the elastic members 5 will be described later. The elastic members 5 may be made of a material having heat-insulating properties, like the flameproof materials 4. Hence, by disposing such elastic members 5 on the peripheral surfaces of the heat dissipation members, a higher heat-insulating effect can be obtained.

In the second and third embodiments, which include elastic members 5, each elastic member 5 need not cover all of the peripheral surface of the flameproof material 4 or heat dissipation member 8, and may be one which can be expected to have the effects of elastic members 5 described above. For example, each elastic member 5 may be one which covers only a part of the peripheral surface so long as the assembled battery has been configured so that the elastic member 5 covers the peripheral surface along the peripheral direction and presses the battery cell 2.

Next, the flameproof materials 4, heat dissipation members 8, and elastic members 5 which constitute the assembled batteries according to the embodiments are described in detail.

### (Flameproof Materials]

The flameproof materials 4 to be used in the assembled batteries 10, 20, and 30 according to the embodiments preferably contain organic fibers and/or inorganic fibers, and more preferably further contain inorganic particles according to need. In the embodiments, use can be made of these materials which have been processed into, for example, a sheet shape. Since it is important that materials for constituting the flameproof materials 4 should have heat-insulating properties, these materials are selected from among materials having high heat-insulating performance.

Examples of the inorganic fibers include silica-alumina fibers, alumina fibers, silica fibers, rock wool, alkaline-earth silicate fibers, glass fibers, zirconia fibers, and potassium titanate whisker fibers. These inorganic fibers are preferred from the standpoints of heat resistance, strength, availability, etc. Inorganic fibers of one kind may be used alone, or two or more kinds of inorganic fibers may be used in combination. Especially preferred of those inorganic fibers from the standpoint of handleability are silica-alumina fibers, alumina fibers, silica fibers, rock wool, alkaline-earth silicate fibers, and glass fibers.

The cross-sectional shape of the inorganic fibers is not particularly limited, and examples thereof include a circular cross-section, a flat cross-section, a hollow cross-section, a polygonal cross-section, and a core cross-section. Of these, fibers having an unusual cross-section such as a hollow, flat, or polygonal cross-section are suitable for use because such fibers slightly improve the heat-insulating properties.

A preferred lower limit of the average fiber length of the inorganic fibers is 0.1 mm, and a more preferred lower limit thereof is 0.5 mm. Meanwhile, a preferred upper limit of the average fiber length of the inorganic fibers is 50 mm, and a more preferred upper limit thereof is 10 mm. In case where the average fiber length of the inorganic fibers is less than 0.1 mm, the inorganic fibers are less apt to be intertwined with each other and this may reduce the mechanical strength of the flameproof material 4. Meanwhile, in case where the average fiber length thereof exceeds 50 mm, the inorganic fibers, although having a reinforcing effect, cannot be tightly intertwined with each other, or the individual inorganic fibers separately become round and this is prone to form continuous voids and may hence result in a decrease in heat-insulating property.

A preferred lower limit of the average fiber diameter of the inorganic fibers is 1 µm, a more preferred lower limit thereof is 2 µm, and a still more preferred lower limit thereof is 3 µm. Meanwhile, a preferred upper limit of the average fiber diameter of the inorganic fibers is 15 µm, and a more preferred upper limit thereof is 10 µm. In case where the average fiber diameter of the inorganic fibers is less than 1 µm, the inorganic fibers themselves are likely to have reduced mechanical strength. From the standpoint of influences on human health, the average fiber diameter of the inorganic fibers is preferably 3 µm or larger. Meanwhile, in case where the average fiber diameter of the inorganic fibers is larger than 15 µm, there is a possibility that heat transfer by the inorganic fibers as a solid medium might be enhanced to result in a decrease in heat-insulating property and that the flameproof material might be deteriorated in shapability and strength.

As the organic fibers, fibers made of heat-curing resins and thermoplastic resins can be selected. For example, use can be made of synthetic fibers made of modified poly(ethylene terephthalate) (PET), polyethylene (PE), polypropylene, polyesters, nylons, poly(butylene terephthalate), and the like.

The kinds, structures, etc. of synthetic fibers usable in the embodiments are explained in greater detail below.

Vinylon: fibers made of a long-chain synthetic polymer including at least 65 mass% vinyl alcohol units.

Vinylal: fibers made of a long-chain synthetic poly(vinyl alcohol) polymer having a different degree of acetalization.

Poly(vinyl chloride) (chlorofiber): fibers made of a long-chain synthetic polymer including vinyl chloride units as a main component.

Vinylidene (poly(vinylidene chloride), chlorofiber): fibers made of a long-chain synthetic polymer including vinylidene chloride units (-CH₂-CCl₂-) as a main component.

Acrylic: fibers made of a long-chain synthetic polymer including at least 85 mass% repeating units of acrylonitrile group.

Modacrylic: fibers made of a long-chain synthetic polymer including repeating units of acrylonitrile group in an amount of 35 mass% or larger but less than 85 mass%.

Nylon (polyamide): fibers made of a long-chain synthetic polymer in which 85% or more of repeating amide bonds are bonded to aliphatic or alicyclic units.

Aramid: fibers made of a long-chain synthetic polymer in which 85 mass% or more of amide or imide bonds are each directly bonded to two benzene rings and the number of imide bonds, if any, does not exceed the number of amide bonds.

Polyester: fibers made of a long-chain synthetic polymer including at least 85 mass% units of an ester of terephthalic acid with a dihydric alcohol.

Poly(ethylene terephthalate) (PET): fibers made of a long-chain synthetic polymer including at least 85 mass% units of an ester of terephthalic acid with ethylene glycol.

Poly(trimethylene terephthalate) (PTT): fibers made of a long-chain synthetic polymer including at least 85 mass% units of an ester of terephthalic acid with 1,3-propanediol.

Poly(butylene terephthalate) (PBT): fibers made of a long-chain synthetic polymer including at least 85 mass% units of an ester of terephthalic acid with 1,4-butanediol.

Polyethylene (PE): fibers made of a long-chain synthetic polymer formed from a saturated aliphatic hydrocarbon and having no substituents.

Polypropylene (PP): fibers made of a long-chain synthetic polymer which is a polymer formed from a saturated aliphatic hydrocarbon and having a methyl side chain bonded to one of every two carbon atoms and which has stereoregularity and has no other substituents.

Polyurethane (elastane): fibers made of a long-chain synthetic polymer which includes 85 mass% or more polyurethane segment and which, when elongated three times the tension-free length, rapidly recovers the original length upon release from the tension.

Poly(lactic acid) (polylactide): fibers made of a long-chain synthetic polymer including lactic ester units in an amount of 50 mass% or larger.

Preferred ranges of the average fiber length and average fiber diameter of the organic fibers are the same as those of the inorganic fibers.

The inorganic particles are preferably ones made of a compound having heat resistance. For example, a metal oxide can be used.

Specific examples of the metal oxide include silica (SiO₂), alumina (Al₂O₃), mullite (Al₆O₁₃Si₂), zirconia (ZrO₂), magnesia (MgO), and titania (TiO₂). However, the metal oxide is not limited to these. Besides those metal oxides, preferred examples of the inorganic particles include boron nitride (BN) and boron carbide (B₄C).

### (Heat Dissipation Members)

As materials for the heat dissipation members to be used in the assembled batteries 10, 20, and 30 according to the embodiments, materials having thermal conductivity can be selected so that the heat which was generated by each battery cell 2 and has reached the heat dissipation member 8 is diffused in plane directions of the heat dissipation member 8 and radiated to both end sides of the heat dissipation member 8.

Such materials preferably have heat transfer coefficients of, for example, 10 (W/m·K) or higher. Specifically, it is preferred to select at least one material from among metals, carbon, and ceramics.

Examples of the metals include stainless steel, aluminum or aluminum alloys, and copper or copper alloys.

Examples of the ceramics include SiC and AlN.

### (Elastic Members)

As the elastic members 5 to be used in the assembled batteries 10, 20, and 30 according to the embodiments, use can be made of materials that have both elasticity which enables the elastic members 5 to deform flexibly in accordance with deformations of the battery cells 2 and stretchability which enables the elastic members 5 to press the battery cells 2 after having been attached to the peripheral surfaces of the flameproof materials 4 or heat dissipation members 8 and that preferably have heat-insulating properties. As such elastic members 5, a rubber or an elastomer can, for example, be used.

The elastic members 5 shown in FIG. 2 and FIG. 3 are each a tubular body which is open at both ends and in which the outer surface and the inner surface are smooth. However, the shape of the elastic members 5 is not limited to that shown in FIG. 2 and FIG. 3.

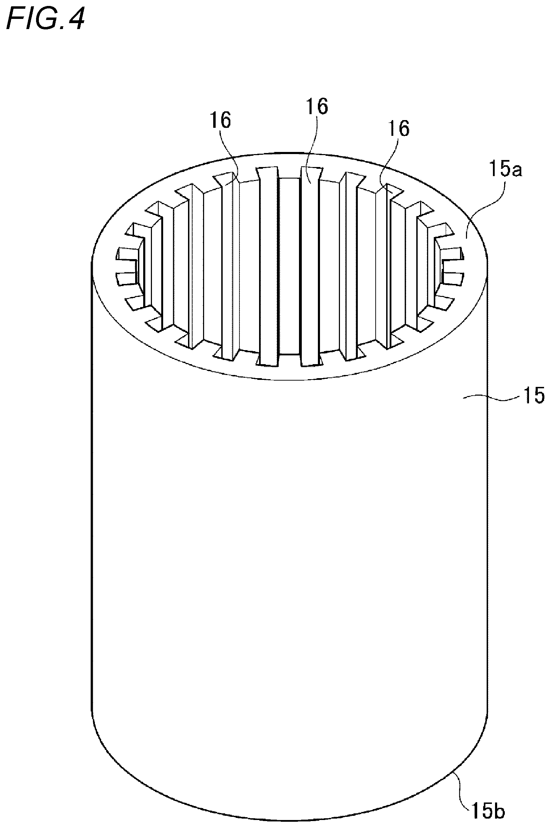

FIG. 4 is a perspective view showing a shape example of elastic members applicable to an assembled battery according to an embodiment of the present invention. Elastic members having the shapes shown below can all be used in place of the elastic members 5 of the assembled battery 20 shown in FIG. 2 or the assembled battery 30 shown in FIG. 3. The effects, etc. of elastic members having the various shapes shown below are hence explained on the assumption that the elastic members have been applied to the assembled battery 20 or 30.

As FIG. 4 shows, the inner surface of the elastic member 15, which is a tubular body, has a plurality of grooves 16 formed therein which extend from one end 15a to the other end 15b of the elastic member 15. In this embodiment, the terms "one end 15a" and "the other end 15b" for the elastic member 5 (tubular body) respectively mean one longitudinal-direction (top-bottom direction in FIG. 2) end and the other longitudinal-direction end of the elastic member 5. That is, those terms mean the open ends of the tubular body.

In cases when elastic members 15 thus configured are used in the assembled battery 20 shown in FIG. 2 or in the assembled battery 30 shown in FIG. 3, it is possible to obtain the same effects as in the second embodiment or the third embodiment, respectively.

Furthermore, since the elastic member 15 has grooves 16 in the inner surface thereof, spaces are formed between the elastic member 15 and the flameproof material 4 or between the elastic member 15 and the heat dissipation member 8. Because of this, in cases when heat has reached the elastic member 15, the gas in the spaces is heated and the high-temperature gas is discharged from the spaces to the one end 15a side and the other end 15b side of the elastic member 15. As a result, a fresh gas is introduced into the spaces and the battery cell 2 can hence be effectively cooled.

The grooves 16 formed in the elastic member 15 are not particularly limited in the number, depth, peripheral-direction width, etc. thereof. By changing the number, depth, and peripheral-direction width of the grooves 16, the elasticity, stretchability, etc. of the elastic member 15 can be changed. It is hence possible to variously design the grooves 16 in accordance with required properties and the size of that region of the battery case 7 which is for encasing the battery cell 2 therein.

The grooves 16 need not be always formed in a direction parallel with the longitudinal direction of the elastic member 15. However, from the standpoint of preventing the heat of the battery cell 2 from being transferred to adjoining battery cells 2, it is preferred to discharge the heated gas to the electrode surface 2a side of the battery cell 2 and to the side where the surface facing the electrode surface 2a is present. Consequently, in the case of forming grooves 16, the grooves 16 may be formed so as to extend from the one end 15a to the other end 15b of the elastic member 15.

In cases when grooves 16 have been formed so as not extend in a direction parallel with the longitudinal direction of the elastic member 15 but to have a given angle with the parallel direction, it is possible to cool a wider area in the surface of the battery cell 2. The grooves 16 may have been formed either helically or curvedly.

The given angle is preferably larger than 0° with respect to the parallel direction. Meanwhile, the given angle is preferably 45° or less because the heated high-temperature gas can be efficiently discharged, and is more preferably 30° or less.

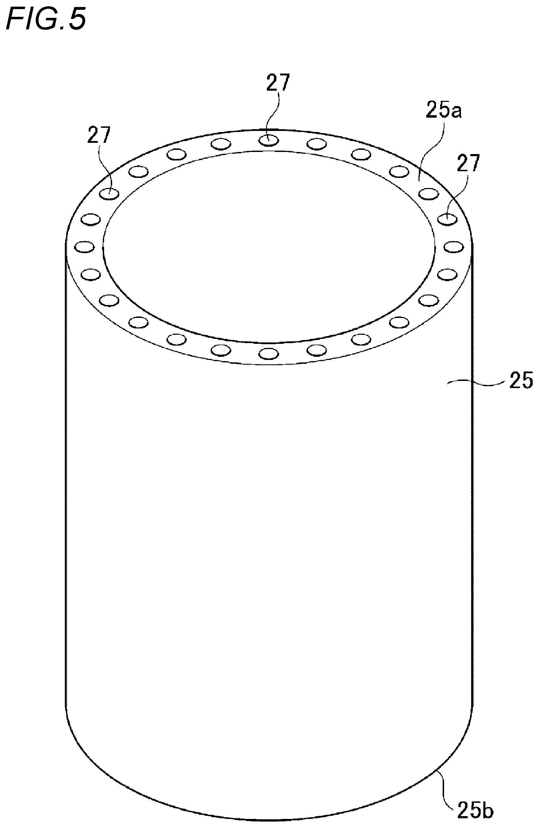

FIG. 5 is a perspective view showing another shape example of elastic members applicable to the assembled battery according to an embodiment of the present invention. As FIG. 5 shows, the elastic member 25 is a tubular body which is open at both ends and in which the inner surface and the outer surface are smooth, but has a plurality of through holes 27 in an inner portion thereof which pierce the elastic member 25 from one end 25a to the other end 25b.

Also, in an assembled battery employing elastic members 25 thus configured, it is possible to obtain the same effects as in the case where the elastic members 5 and the elastic members 15 are used. Since each elastic member 25 has through holes 27 in the thickness-direction inner portion, the inside of each through hole 27 is a space. Consequently, in cases when heat generated by the battery cell 2 has reached the elastic member 25, the gas in the through holes 27 is heated and the resultant high-temperature gas is discharged from the through holes 27 to the one end 15a side and the other end 15b side of the elastic member 25. As a result, a fresh gas is introduced into the through holes 27 and the battery cell 2 can hence be efficiently cooled.

The through holes 27 formed in the elastic member 25 are not particularly limited in the number, size, etc. thereof. As in the elastic member 15 shown in FIG. 4, the through holes 27 can be variously designed in accordance with properties required of the elastic member 25 and the size of that region of the battery case 7 which is for encasing the battery cell 2 therein.

The through holes 27 need not be always formed in a direction parallel with the longitudinal direction of the elastic member 25. In the case of forming through holes 27, the through holes 27 may be formed so as to extend from the one end 25a to the other end 25b of the elastic member 25.

In cases when through holes 27 have been formed so as not to extend in a direction parallel with the longitudinal direction of the elastic member 25 but to have the given angle with the parallel direction, it is possible to cool a wider area in the surface of the battery cell 2. Note that the through holes 27 may have been formed either helically or curvedly.

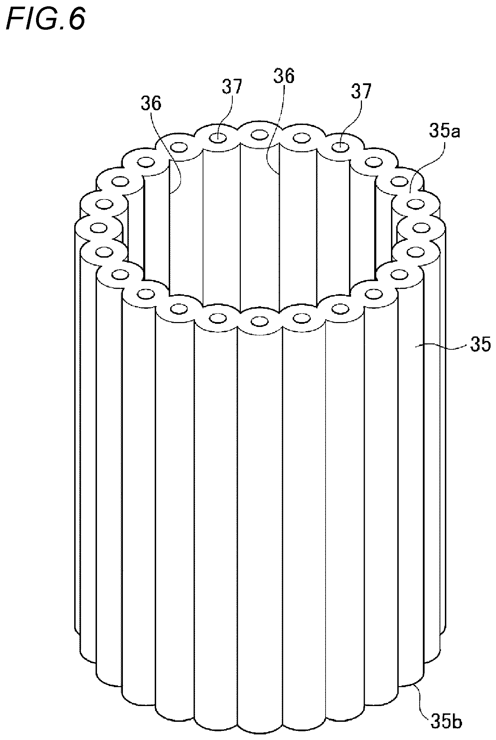

FIG. 6 is a perspective view showing still another shape example of elastic members applicable to the assembled battery according to an embodiment of the present invention. As FIG. 6 shows, the elastic member 35 has a shape formed by disposing a plurality of tubes side-by-side along the longitudinal direction thereof and bonding the adjoining surfaces to each other. Consequently, the elastic member 35 has a plurality of grooves 36 formed in the inner surface thereof like the elastic member 15 shown in FIG. 4, and has a plurality of through holes 37 in a thickness-direction inner portion thereof which pierce the elastic member 35 form one end 35a to the other end 35b, like the elastic member 25 shown in FIG. 5.

Also, in an assembled battery employing elastic members 35 thus configured, it is possible to obtain the same effects as in the case where the elastic members 5, 15, and 25 are used. Each elastic member 35 has the grooves 36 to form spaces between the elastic member 35 and the flameproof material 4 or between the elastic member 35 and the heat dissipation member 8 and further has the through holes 37. Consequently, the spaces coupled with the through holes 37 enhance the effect of discharging the heated gas to the one end 35a side and the other end 35b side of the elastic member 35, making it possible to more effectively cool the battery cell 2.

The number and size of the through holes 37 to be formed in the elastic member 35 and the depth, etc. of the grooves 36 to be formed in the elastic member 35 can be suitably designed.

As in the case of the elastic member 15 and the elastic member 25, in cases when grooves 36 or through holes 37 have been formed so as to not to extend in a direction parallel with the longitudinal direction of the elastic member 35 but to have the given angle with the parallel direction, it is possible to cool a wider area in the surface of the battery cell 2. The grooves 36 and the through holes 37 may have been formed either helically or curvedly.

### <Battery Case>

The battery case 7 for encasing therein any of the assembled batteries 10, 20, and 30 according to the embodiments is not particularly limited in the material and shape thereof. Besides being a polycarbonate, the material of the battery case 7 can be PP, PET, a polyamide (PA), aluminum, stainless steel (steel use stainless; SUS), or the like. The shape of the battery case 7 can be selected at will in accordance with the device, e.g., power tool, to which the assembled battery is to be applied.

Incidentally, the assembled batteries 10, 20, and 30 according to the embodiments are ones in which each battery cell 2 by itself has heat-insulating properties and which include the heat dissipation members 8 for further inhibiting heat transfer to adjoining battery cells 2 and can inhibit the occurrence of heat propagation. These battery cells 2 hence may not have been encased in the battery case 7. For example, a plurality of battery cells 2 each covered with a flameproof material 4 and a heat dissipation member 8 may be tied up with a band or the like to configure an assembled battery and this assembled battery in such a configuration can be mounted in a device, e.g., a power tool.

### [Method for fabricating Assembled Battery]

The assembled battery 10 according to this embodiment can be easily fabricated, as an assembled battery showing the effects described above, by merely covering each of battery cells 2 with a flameproof material 4 and attaching thereto a heat dissipation member 8 which is, for example, a tubular body. Since a flameproof material 4 and a heat dissipation member 8 are attached to each of the battery cells 2, a complicated design is unnecessary for the battery case 7. When attaching elastic members 5, 15, 25, or 35, the assembled battery 20 or 30 can be easily fabricated in the same manner and a complicated design is unnecessary for the battery case 7.

In the embodiments, in cases when the flameproof materials 4 are sheet-shaped ones, the flameproof materials 4 each can be easily processed into a size suitable for covering the peripheral surface of a battery cell 2 regardless of the shape or size of the battery cell 2. When the elastic members are to be attached, the elastic members can be easily attached to various battery cells 2 without being affected by the shapes and sizes of the battery cells 2, since the elastic members have stretchability.

The assembled batteries and battery packs according to the embodiments can be favorably used not only in power tools but in power-assisted bicycles, electric two-wheeled vehicles, electric vehicles, etc.

Various embodiments were explained above while referring to the drawings, but it is a matter of course that the present invention is not limited to those examples. It is apparent that a person skilled in the art can conceive of variously modified or changed examples within the scope of the claims, and these examples are, of course, considered to be within the technical range of the present invention.

### REFERENCE SIGNS LIST

1: Battery pack
2: Battery cell
2a: Electrode surface
3: Electrode
4: Flameproof material
5, 15, 25, 35: Elastic member
7: Battery case
8: Heat dissipation member
10, 20, 30: Assembled battery
16, 36: Groove
27, 37: Through hole

## Claims

1. An assembled battery (20, 30) in which a plurality of battery cells (2) is connected serially or in parallel, the battery cells (2) each having an electrode surface (2a) having an electrode (3) and a peripheral surface (2b) orthogonal to the electrode surface (2a) and being disposed such that the peripheral surfaces (2b) face each other,
the assembled battery (20, 30) comprising
the battery cells (2),
a flameproof material (4) covering the peripheral surface (2b) of the battery cells (2), and
a heat dissipation member (8) covering the peripheral surface (2b) of the battery cells (2) which is covered with the flameproof material (4),
wherein the assembled battery (20, 30) includes an elastic member (5, 15, 25, 35) disposed between the flameproof material (4) and the heat dissipation member (8), the elastic member (5, 15, 25, 35) covering at least a part of the peripheral surface (2b) of the battery cells (2) which is covered with the flameproof material (4) and pressing the battery cells (2), or
wherein the assembled battery (20, 30) includes an elastic member (5, 15, 25, 35) provided to at least a part of the peripheral surface (2b) of the battery cells (2) which is covered with both the flameproof material (4) and the heat dissipation member (8), the elastic member (5, 15, 25, 35) covering the peripheral surface (2b) along a peripheral direction and pressing the battery cells (2).

2. The assembled battery (20, 30) according to claim 1, wherein the heat dissipation member (8) is a tubular body which is open at both ends.

3. The assembled battery (20, 30) according to claim 1, wherein the heat dissipation member (8) is a sheet-shaped heat dissipation material wrapped around the peripheral surface (2b) of the battery cells (2) which is covered with the flameproof material (4).

4. The assembled battery (20, 30) according to any one of claims 1 to 3, wherein the heat dissipation member (8) is made of at least one material selected from among metals, carbon, and ceramics.

5. The assembled battery (20, 30) according to any one of claims 1 to 4, wherein the flameproof material (4) contains organic fibers and/or inorganic fibers.

6. The assembled battery (20, 30) according to any one of the preceding claims, wherein the elastic member (5, 15, 25, 35) is made of a rubber or an elastomer.

7. The assembled battery (20, 30) according to any one of the preceding claims, wherein the elastic member (5, 15, 25, 35) is a tubular body which is open at both ends.

8. The assembled battery (20, 30) according to claim 7, wherein the elastic member (15, 35) has a plurality of grooves (16, 36) extending in an inner surface of the tubular body from one end (15a, 35a) to the other end (15b, 35b) of the tubular body.

9. The assembled battery (20, 30) according to claim 7 or 8, wherein the elastic member (25, 35) has a plurality of through holes (27, 37) piercing the tubular body from one end (25a, 35a) to the other end (25b, 35b) of the tubular body.

10. A battery pack (1) in which the assembled battery (20, 30) according to any one of claims 1 to 9 is encased in a battery case (7).

## Patentansprüche

1. Zusammengesetzte Batterie (20, 30), in der mehrere Batteriezellen (2) in Reihe oder parallel geschaltet sind, wobei die Batteriezellen (2) jeweils eine Elektrodenoberfläche (2a) mit einer Elektrode (3) und einer zu der Elektrodenoberfläche (2a) orthogonalen peripheren Oberfläche (2b) aufweisen und derart angeordnet sind, dass die peripheren Oberflächen (2b) einander zugewandt sind,
wobei die zusammengesetzte Batterie (20, 30) umfasst
die Batteriezellen (2),
ein flammfestes Material (4), das die periphere Oberfläche (2b) der Batteriezellen (2) bedeckt, und
ein Wärmeableitungselement (8), das die periphere Oberfläche (2b) der Batteriezellen (2), die mit dem flammfesten Material (4) bedeckt ist, bedeckt,
wobei die zusammengesetzte Batterie (20, 30) ein elastisches Element (5, 15, 25, 35) einschließt, das zwischen dem flammfesten Material (4) und dem Wärmeableitungselement (8) angeordnet ist, wobei das elastische Element (5, 15, 25, 35), mindestens einen Teil der peripheren Oberfläche (2b) der Batteriezellen (2), der mit dem flammfesten Material (4) bedeckt ist, bedeckt und die Batteriezellen (2) zusammendrückt oder wobei die zusammengesetzte Batterie (20, 30) ein elastisches Element (5, 15, 25, 35) einschließt, das sich auf mindestens einem Teil der peripheren Oberfläche (2b) der Batteriezellen (2), der sowohl mit dem flammfesten Material (4) als auch mit dem Wärmeableitungselement (8) bedeckt ist, befindet, wobei das elastische Element (5, 15, 25, 35), die periphere Oberfläche (2b) entlang einer peripheren Richtung bedeckt und die Batteriezellen (2) zusammendrückt.

2. Zusammengesetzte Batterie (20, 30) gemäß Anspruch 1, wobei das Wärmeableitungselement (8) ein rohrförmiger Körper ist, der an beiden Seiten offen ist.

3. Zusammengesetzte Batterie (20, 30) gemäß Anspruch 1, wobei das Wärmeableitungselement (8) ein blattförmiges Wärmeableitungsmaterial ist, das um die periphere Oberfläche (2b) der Batteriezellen (2), die mit dem flammfesten Material (4) bedeckt ist, gewickelt ist.

4. Zusammengesetzte Batterie (20, 30) gemäß einem der Ansprüche 1 bis 3, wobei das Wärmeableitungselement (8) aus einem Material, ausgewählt unter Metallen, Kohlenstoff und Keramik hergestellt ist.

5. Zusammengesetzte Batterie (20, 30) gemäß einem der Ansprüche 1 bis 4, wobei das flammfeste Material (4) organische Fasern und/oder anorganische Fasern enthält.

6. Zusammengesetzte Batterie (20, 30) gemäß einem der vorhergehenden Ansprüche, wobei das elastische Element (5, 15, 25, 35) aus einem Kautschuk oder einem Elastomer hergestellt ist.

7. Zusammengesetzte Batterie (20, 30) gemäß einem der vorhergehenden Ansprüche, wobei das elastische Element (5, 15, 25, 35) ein rohrförmiger Körper ist, der an beiden Enden offen ist.

8. Zusammengesetzte Batterie (20, 30) gemäß Anspruch 7, wobei das elastische Element (15, 35) mehrere Rillen (16, 36) aufweist, die sich in einer inneren Oberfläche des rohrförmigen Körpers von einem Ende (15a, 35a) zum anderen Ende (15b, 35b) des rohrförmigen Körpers erstrecken.

9. Zusammengesetzte Batterie (20, 30) gemäß Anspruch 7 oder 8, wobei das elastische Element (25, 35) mehrere Durchgangslöcher (27, 37) aufweist, die den rohrförmigen Körper von einem Ende (25a, 35a) zum anderen Ende (25b, 35b) des rohrförmigen Körpers durchdringen.

10. Batteriepack (1), in dem die zusammengesetzte Batterie (20, 30) gemäß einem der Ansprüche 1 bis 9 in einem Batteriegehäuse (7) eingeschlossen ist.

## Revendications

1. Batterie assemblée (20, 30) dans laquelle une pluralité de cellules de batterie (2) est reliée en série ou en parallèle, les cellules de batterie (2) présentant chacune une surface d'électrode (2a) présentant une électrode (3) et une surface périphérique (2b) orthogonale à la surface d'électrode (2a) et étant disposées de sorte que les surfaces périphériques (2b) soient en face les unes des autres,
la batterie assemblée (20, 30) comprenant
les cellules de batterie (2),
un matériau ignifuge (4) recouvrant la surface périphérique (2b) des cellules de batterie (2),
et un élément de dissipation thermique (8) recouvrant la surface périphérique (2b) des cellules de batterie (2) qui est recouverte du matériau ignifuge (4),
dans laquelle la batterie assemblée (20, 30) comprend un élément élastique (5, 15, 25, 35) disposé entre le matériau ignifuge (4) et l'élément de dissipation thermique (8), l'élément élastique (5, 15, 25, 35) recouvrant au moins une partie de la surface périphérique (2b) des cellules de batterie (2) qui est recouverte du matériau ignifuge (4) et pressant les cellules de batterie (2), ou
dans laquelle la batterie assemblée (20, 30) comprend un élément élastique (5, 15, 25, 35) muni sur au moins une partie de la surface périphérique (2b) des cellules de batterie (2) qui est recouverte à la fois du matériau ignifuge (4) et de l'élément de dissipation thermique (8), l'élément élastique (5, 15, 25, 35) recouvrant la surface périphérique (2b) le long d'une direction périphérique et pressant les cellules de batterie (2).

2. Batterie assemblée (20, 30) selon la revendication 1, dans laquelle l'élément de dissipation thermique (8) est un corps tubulaire qui est ouvert à la fois à une extrémité et à l'autre extrémité.

3. Batterie assemblée (20, 30) selon la revendication 1, dans laquelle l'élément de dissipation thermique (8) est un matériau de dissipation thermique en forme de feuille enveloppé autour de la surface périphérique (2b) des cellules de batterie (2) qui est recouverte du matériau ignifuge (4).

4. Batterie assemblée (20, 30) selon l'une quelconque des revendications 1 à 3, dans laquelle l'élément de dissipation thermique (8) est fait d'au moins un matériau sélectionné parmi des métaux, du carbone, et des céramiques.

5. Batterie assemblée (20, 30) selon l'une quelconque des revendications 1 à 4, dans laquelle le matériau ignifuge (4) contient des fibres organiques et/ou des fibres inorganiques.

6. Batterie assemblée (20, 30) selon l'une quelconque des revendications précédentes, dans laquelle l'élément élastique (5, 15, 25, 35) est fait d'un caoutchouc ou d'un élastomère.

7. Batterie assemblée (20, 30) selon l'une quelconque des revendications précédentes, dans laquelle l'élément élastique (5, 15, 25, 35) est un corps tubulaire qui est ouvert à la fois à une extrémité et à l'autre extrémité.

8. Batterie assemblée (20, 30) selon la revendication 7, dans laquelle l'élément élastique (15, 35) présente une pluralité de rainures (16, 36) s'étendant dans une surface intérieure du corps tubulaire depuis une extrémité (15a, 35a) jusqu'à l'autre extrémité (15b, 35b) du corps tubulaire.

9. Batterie assemblée (20, 30) selon la revendication 7 ou la revendication 8, dans laquelle l'élément élastique (25, 35) présente une pluralité de trous traversants (27, 37) perçant le corps tubulaire d'une extrémité (25a, 35a) jusqu'à l'autre extrémité (25b, 35b) du corps tubulaire.

10. Bloc-batterie (1) dans lequel la batterie assemblée (20, 30) selon l'une quelconque des revendications 1 à 9 est logée dans un boîtier de batterie (7).
